# EUROPEAN PATENT SPECIFICATION

(11) **EP 2 204 053 B1**
(45) Date of publication and mention of the grant of the patent: **15.05.2019**
(21) Application number: 08833064.2
(22) Date of filing: 26.09.2008
(51) Int. Cl.: H04L 12/24, H04L 12/14, H04L 29/08, H04W 4/24, H04W 8/24

(54) **SYSTEMS AND METHODS FOR PROVISIONING WIRELESS DEVICES BASED ON MULTIPLE NETWORK-SERVICE APPLICATION PROFILES AND DATA SESSION CONFLICT RESOLUTION**
SYSTEME UND VERFAHREN ZUR PROVISIONIERUNG VON DRAHTLOSEN EINRICHTUNGEN AUF DER BASIS VON MEHREREN NETZDIENSTANWENDUNGSPROFILEN UND DATENSITZUNGSKONFLIKTAUFLÖSUNG
SYSTÈMES ET PROCÉDÉS POUR APPROVISIONNER DES DISPOSITIFS SANS FIL SUR LA BASE DE PROFILS D'APPLICATIONS MULTIPLES DE SERVICES RÉSEAUX ET DE RÉSOLUTION DE CONFLITS ENTRE DES SESSIONS DE DONNÉES

(30) Priority: 26.09.2007 US 975405 P; 04.08.2008 US 185283
(43) Date of publication of application: 07.07.2010
(73) Proprietor: QUALCOMM Incorporated, San Diego, CA 92121 (US)
(72) Inventor: DUGGAL, Nakul, San Diego California 92121 (US); QU, Hai, San Diego California 92121 (US); GURGANUS, Bryan, San Diego California 92121 (US); HOLCMAN, Alejandro, R., San Diego California 92121 (US)
(74) Representative: Heselberger, Johannes
(86) International application number: PCT/US2008/077811
(87) International publication number: WO 2009/042840

(56) References cited:
- EP-A- 1 265 397
- WO-A-2007/081727

## Description

### CLAIM OF PRIORITY UNDER 35 U.S.C. §119

The present Application for Patent claims priority to Provisional Application No. 60/975,405, entitled, "Apparatus and Methods Associated with Open Market Handsets," filed on 26 September 2007 and assigned to the assignee hereof.

### BACKGROUND

### Field

The present aspects relate to wireless communication devices, and more particularly, to systems, apparatus and methods for storing provisioning information on a wireless device, specifically provisioning information that supports multiple application profiles and resolution of data session conflict for network service applications requesting simultaneous network access.

### Background

A wireless communication device, otherwise referred to as a handset, is utilized to communicate with another handset or a landline phone via a wireless communication network. In order to establish a connection with the wireless communication network, the handset must have a relationship with an operator or service provider to allow access to the wireless communication network and to manage billing the user of the handset for the use of the wireless communication network. In a closed market system, the operator maintains a degree of control over the distribution and sale of handsets operable on the wireless communication network of the operator. For example, the operator may distribute and sell the handsets itself, or authorize a third party to perform this task, where the respective closed market handsets are authorized and provisioned by the operator to work on the wireless communication network of the operator. Thus, a closed market handset is limited for use in a specific wireless communication network corresponding to the respective operator.

In contrast to the closed market system, an open market system allows a handset to be distributed and sold for use on any of a plurality of wireless communication networks each corresponding to a respective one of a plurality of different operators. In the open market system, a user must obtain a removable module, such as a smart card, from one of the plurality of different operators, where the user identity module includes a key or other authorization mechanism allowing operation on one of the plurality of wireless communication networks. The user may then insert a removable module that includes user identity information into the open market handset, thereby enabling the open market handset to communicate with the respective wireless communication network associated with the operator that authorized the removable module. For example, a removable module may be referred to as a Removable User Identity Module (RUIM) for a Code Division Multiple Access (CDMA) system, a CDMA Subscriber Identity Module (CSIM) based on a Universal Integrated Circuit Card (UICC) for a CDMA system, Universal Subscriber Identity Module (USIM) based on a UICC for Universal Mobile Telecommunications System (UMTS), or a Subscriber Identity Module (SIM) in a Global System for Mobile communications (GSM) system. For the sake of brevity the term removable module is used herein throughout to refer to any module that may be inserted or otherwise is communication with a wireless device that provides for storage of data, such as user identity information.

In either the closed market or open market scenario the provisioning information within the handset is generally limited to establishing and maintaining a single data session at one particular time. In this regard, all network-related applications are generally configured to allow for the use the same data session. For example, if the user is executing an Internet browsing application and subsequently desires to send a message using a Multimedia Messaging Service (MMS) application, the same point-to-point protocol (PPP) data session may be used for both browsing the Internet and sending the MMS message. While this is generally convenient to the wireless device user, it does not allow the network operators and/or service provides an adequate means to track application/service usage. The ability to track application/service usage may be necessary if the network operators and/or service providers desire to bill the user according to the services or applications as opposed to the generic data session. For example, the network operator may desire to bill the user at a first rate for Internet browsing and bill the user at a second rate for MMS messaging. In addition to billing, tracking of application-specific usage may be beneficial to other known or future-known purposes.

Document WO 2007/081727discloses an apparatus for providing network access and application session services which includes a wireless network access device for receiving packet data streams from or transmitting packet data streams to one or more subscribers, and for conveying the packet data streams to or from a network or other subscribers. The wireless network access device includes profile information relating to the one or more subscribers. The apparatus further includes one or more application session services that are provided as a component of the wireless network access device. The wireless network access device selects, based on the profile information, zero or more of the application session services to process the packet data streams. The wireless network access device can also determine an application state associated with the packet data streams, and can modify actions of at least one of the application session services according to the application state.

Further, document EP 1 265 397 relates to a billing system which performs processing in order to provide service to user terminals, and which performs billing for the service provided to the user terminals. In this billing system, user billing profiles UBP are stored in a user billing profile registration unit, by service type and in user terminal units; a billing condition generation unit within a service provider server compares the user billing profile UBP corresponding to a specified service type and to a user terminal with a server billing profile SBP to generate billing conditions, and a billing condition setting unit of a foreign agent sets the billing conditions in a billing unit; and based on the billing conditions thus set, the billing unit executes billing processing for each user terminal.

Therefore a need exists to develop systems, apparatus and methods that provide the network operators and or service providers the ability to track and, in some instances, bill for application usage on a per data session basis and/or on a time of usage basis.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Present aspects define systems, apparatus and methods for provisioning wireless devices with multiple application profiles, such that application-specific network address identifiers are assigned to each application profile. In this regard, data sessions for the applications are established using the application-specific network address. This feature allows the service providers and or network operators to track data sessions based on the application/service that is being used during the data session. The tracking of data session according to application/service usage can provide for differentiated billing schemes based on application/service usage or other tracking-related applications can benefit from such information.

In addition, present aspects may provide for categorizing the application profiles according to data session priority. Categorizing the application profiles according to data session priority assists in determining which data session should be maintained or established in the instance in which a user has established a first data session associated with a first application and subsequently desires to launch a second application while the first data session is ongoing. Thus, in some aspects, the data session related to the application provided higher priority, as defined by the categorization the application profile, will be maintained or established, while the data session provided a lower priority, will either be closed down or not established. In the instance in which the two applications share the same category and thus have the same priority, the subsequently launched second application may share the existing data session.

In one aspect, a method of differentiated data session access on a wireless communication device is defined. The method includes receiving an input to launch a first network-service application and retrieving, from a user identity module in communication with the wireless communication device, a first application profile selected from a plurality of application profiles each having respective profile data. As such, the first application profile corresponds to the first network-service application and includes first profile data. The method additionally includes establishing a first data session for the first network-service application according to the first profile data and launching the first network-service application using the first data session.

In one aspect of the method, retrieving the first application profile further includes retrieving the first application profile that corresponds to the first network service application and comprises first profile data including a first network address identifier. In this regard, in certain aspects, establishing a first data session for the first application further includes establishing a first data session for the first application based on the first network address identifier.

In one optional aspect, the method may further include receiving an input to launch a second network-service application while the first data session is ongoing, and retrieving, from the user identity module, a second application profile selected from the plurality of application profiles. As such, the second application profile corresponds to the second network-service application and includes second profile data. Additionally, the method may include comparing a first priority category from the first profile data and a second priority category from the second profile data and, if the comparison results in the first priority category matching the second priority category, then launching the second application using the first data session.

In another optional aspect, the method may further include receiving an input to launch a second network-service application while the first data session is ongoing, and retrieving, from the user identity module, a second application profile selected from the plurality of application profiles. As such, the second application profile corresponds to the second network-service application and comprises second profile data. Additionally, the method may include comparing a first priority category from the first profile data and a second priority category from the second profile data and, if the comparison results in the first application category not matching the second application category, identifying a conflict and determining a resolution to the conflict based on a predetermined resolution routine.

In one further aspect of the method, determining a resolution to the conflict may include identifying which one of the first priority category and the second application category corresponds to a preferred priority category and maintaining the first data session and not launching the second application, if the first priority category is identified as the preferred priority category or closing the first data session, establishing a second data session according to the second profile data and launching the second network-service application using the second data session, if the second priority category is identified as the preferred priority category.

Alternatively, in other aspects, determining a resolution to the conflict may include providing a conflict notification to a user of the wireless device. The conflict notification provides a first user option to maintain the first data session and not launch the second network-service application and a second user option to close the first data session, establish the second data session and launch the second network-service application. Additionally the method may include, in response to providing the conflict notification, receiving a user input that corresponds to the first user option and maintaining the first data session and not launching the second application. Alternatively, the method may include, in response to providing the conflict notification, receiving a user input that corresponds to the second user option and closing the first data session, establishing a second data session according to the second profile data and launching the second network-service application using the second data session.

In those aspects in which a second data session is established, the second application profile that corresponds to the second application may include a network address identifier that differs from the first network address identifier. In such aspects, the second data session is established based in the second network address identifier.

In another alternate aspect of the method establishing either the first or second data session may further include generating first billing data corresponding to the first profile data, or generating second billing data corresponding to the second profile data. In such aspects, the first and second billing data may be based on the application-specific network address identifiers and, as such the first billing data differs from the second billing data in respect to the network address identifiers.

A related aspect is provided for by at least one processor that is configured to provide differentiated data session access on a wireless communication device. The processor includes a first module for receiving an input to launch a first network-service application and a second module for retrieving, from a user identity module in communication with the wireless communication device, a first application profile selected from a plurality of application profiles each having respective profile data. As such, the first application profile corresponds to the first network-service application and comprises first profile data. The processor additionally includes a third module for establishing a first data session for the first network-service application according to the first profile data and a fourth module for launching the first network-service application using the first data session.

A further related aspect is defined by a computer program product that includes a computer-readable medium. The medium includes a first set of codes for causing a computer to receive an input to launch a first network-service application and a second set of codes for causing the computer to retrieve, from a user identity module in communication with the wireless communication device, a first application profile selected from a plurality of application profiles each having respective profile data. As such, the first application profile corresponds to the first network-service application and includes first profile data. The medium further includes a third set of codes for causing the computer to establish a first data session for the first network-service application according to the first profile data and a fourth set of codes for causing the computer to launch the first network-service application using the first data session.

In yet another related aspect an apparatus for providing differentiated data session access on a wireless communication device is provided. The apparatus includes means for receiving an input to launch a first network-service application and means for retrieving, from a user identity module in communication with the wireless communication device, a first application profile selected from a plurality of application profiles each having respective profile data. The first application profile corresponds to the first network-service application and comprises first profile data. The apparatus additionally includes means for establishing a first data session for the first network-service application according to the first profile data and means for launching the first network-service application using the first data session.

A further aspect of the innovation provides for a wireless communication device that includes a computer platform having a processor and a memory. The wireless device additionally includes a plurality of network-service applications in communication with the processor and stored in the memory. Additionally, the wireless device includes a user identity module in communication with the processor that includes a plurality of application profiles. Each application profile corresponds to one of the plurality of network service applications and includes profile data. The wireless device also includes a communications interface in communication with the processor and operable to establish a data session with a wireless communications network for one of the plurality of a network service applications based on the profile data and an input to launch the network service application.

In one optional aspect of the wireless device the user identity module further includes the plurality of application profiles including profile data that includes an application-specific network address identifier. In such aspects, the application specific network address identifier may be used to establish the data session with the wireless communications network for the corresponding network service application.

In another optional aspect of the wireless device the user identity module further includes the plurality of application profiles including profile data that includes a priority category identifier that corresponds to a data session priority for the corresponding network-service application. In such aspects, the wireless device may further include a data session manager in communication with the processor and communications interface. The data session manager is operable to resolve a data session conflict if a second network-service application is attempted to be launched while a pre-existing first network-service application has an established first data session.

In one aspect of the wireless device that includes the data session manager, the data session manager may operable to resolve the conflict based on a comparison of the priority category identifier in the corresponding application profiles. In such aspects the data session manager may be further operable to communicate a command to the communications interface to close the first data session and establish a second data session if the second network-service application has a more preferred priority than the first network-service application. Alternatively, in other aspects the data session manager may be further operable to communicate a command to the communications interface to maintain the first data session and prohibit the second network-service application from launching, if the first network-service application has a more preferred priority than the second network-service application.

In alternate aspects of the wireless device that includes the data session manager, the data session manager may further include a conflict notification generator operable to generate a conflict notification and communicate the notification to a user of the device. The conflict notification provides the user with a first option to continue the first data session or a second option to close the first data session and establish a second data session. In this regard the first option allows for the user to maintain the first network-service application, while the second option allows the user to close the first network-service application and begin use of the second network-service application.

In yet a further aspect, the wireless device may optionally include a billing data generator in communication with the processor and the data session manager. The billing data generator is operable to generate billing data on a per data session basis and communicate the billing data to a network entity.

An additional aspect of the present innovation is provided for wireless device provisioning at a network device. The method includes providing for a plurality of application profiles that correspond to a network-service application and include an application-specific network address identifier operable for establishing a data session for the corresponding network-service application and providing a wireless communication device with a user identity module that includes one or more of the application profiles. In optional aspects the method may further include receiving data session tracking information based on wireless device usage of a network address associated with the network address identifier. In those aspects of the method that include receiving data session tracking information, the method may further include determining billing information for data session usage based on the received data session tracking information.

In an additional optional aspect the method may further include categorizing the one or more application profiles according to application priority and providing for a priority category identifier in each of the plurality of application profiles. In such aspects the method may further include providing for a conflict resolution routine that is operable to resolve a data session conflict for network-service applications based on the priority category identifiers in the application profiles and providing for the conflict resolution routine in the user identity module. In one aspect of the method providing the conflict resolution routine further includes providing a conflict resolution routine that automatically maintains or establishes a data session associated with the network-service application determined to have a priority category identifier associated with a more preferred application priority. In another aspect of the method providing the conflict resolution routine further includes providing a conflict resolution routine that communicates a conflict notification to a user of the wireless communication device based on identification of a data session conflict. The data session conflict notification may provide for a first user option to maintain an existing data session and a second user option to close the existing data session and establish a subsequent data session.

A related aspect is defined by at least one processor configured to provision a wireless device at a network device The processor includes a first module for providing for a plurality of application profiles that correspond to a network-service application and include an application-specific network address identifier operable for establishing a data session for the corresponding network-service application. The processor additionally includes a second module for providing a wireless communication device with a user identity module that includes one or more of the application profiles.

A further related aspect is provided for by a computer program product that includes a computer-readable medium. The medium includes a first set of codes for causing a computer to provide for a plurality of application profiles that correspond to a network-service application and include an application-specific network address identifier operable for establishing a data session for the corresponding network-service application and a second set of codes for causing the computer to provide a wireless communication device with a user identity module that includes one or more of the application profiles.

Yet a further related aspect is defined by an apparatus for providing differentiated data session access on a wireless communication device. The apparatus includes means for providing for a plurality of application profiles that correspond to a network-service application and include an application-specific network address identifier operable for establishing a data session for the corresponding network-service application and means for providing a wireless communication device with a user identity module that includes one or more of the application profiles.

Another aspect of the present innovation is provided for by a network system including one or more devices. The system includes a computer platform having a processor and a memory and a provisioning module in communication with the processor and stored in the memory. The provisioning module is operable to provide user identity modules (UIMs) with one or more application profiles that each correspond to a network-service application and include an application-specific network address identifier operable for establishing a data session for the corresponding network-service application.

In one aspect, the network system includes a data session tracking module operable to receive data session tracking information from wireless communication devices having the UIMs. The data session tracking information is based on wireless device usage of a network address associated with the network address identifier. In such aspects, the system may further include a billing module operable to determine billing charges for the data session usage in the wireless devices having UIMs based on the received data session tracking information.

In optional aspects of the network system the provisioning module is further operable to categorize the one or more application profiles according to data session priority and provide for a priority category identifier in each of the application profiles. In such aspects, the provisioning module may be further operable to provide a conflict resolution routine that is operable to resolve an application conflict for network-service applications based on the priority category identifiers in the application profiles and provide for the conflict resolution routine in the user identity module. In such aspects, the conflict resolution routine may be operable to automatically maintain or establish a data session associated with the network-service application determined to have a priority category identifier associated with a more preferred application priority. In other aspects, the conflict resolution routine may be operable to generate and communicate a data session conflict notification to a user of the wireless communication device based on identification of a data session conflict. The data session conflict notification provides for a first user option to maintain an existing data session and a second user option to close the existing data session and establish a subsequent data session.

Thus, present aspects provide for methods, systems and apparatus for providing differentiated data session access in a wireless device. User Identity Modules (UIMs) are provisioned such that network-service applications resident on the wireless device are associated with a corresponding application profile within the UIM. Each network-service application has a corresponding network address identifier defined within the user profile. The network address associated with the identifier is user to establish a data session for the corresponding network service application. By providing for application-specific network addresses, service providers and/or network operators can differentiate between what services a user is accessing during a data session. This provides for a tracking mechanism that may be used by the service provider or network operator to differentiate the billing rates associated with services. In addition, the UIMs may be provisioned with priority category identifiers that allow the associated network-service application to be prioritized for data session establishment.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote the elements, and in which:
Fig. 1 is a schematic diagram of one aspect of a system for establishing differentiated data sessions between applications on a wireless device and a wireless network;
Fig. 2 is a schematic diagram of another aspect of a wireless device within a system for establishing differentiated data sessions between applications on a wireless device and a wireless network;
Fig. 3 is schematic diagram of another aspect of a network device within a system for establishing differentiated data sessions between applications on a wireless device and a wireless network;
Fig. 4 is a schematic diagram of one aspect of a wireless communication device operable as described herein;

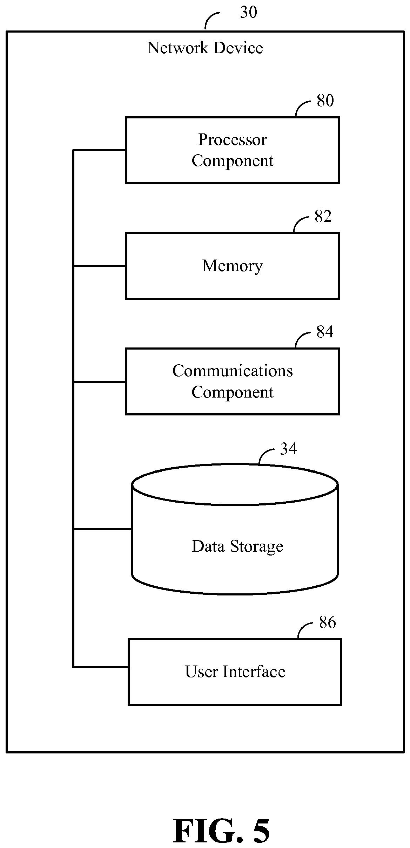

Fig. 5 is a schematic diagram of one aspect of a network device operable as described herein;
Fig. 6 is a flow diagram depicting a method for establishing data session based on application profiles in a User Identity Module (UIM), according to aspects herein described;
Fig. 7 is a flow diagram depicting a method for resolving data session conflict based on conflict priority defined in application profiles in a UIM, according to aspects herein described;
Fig. 8 is flow diagram of a method for establishing data sessions on a wireless device based on application profiles in a User Identity Module (UIM), in accordance with present aspects herein disclosed; and
Fig. 9 is a flow diagram of a method for provisioning UIMs at a network device with application profiles, according to aspects herein disclosed.

### DETAILED DESCRIPTION

The present devices, apparatus, methods, computer-readable media and process ors now will be described more fully hereinafter with reference to the accompanying drawings, in which aspects of the invention are shown. The devices, apparatus, methods, computer-readable media and processors may, however, be embodied in many different forms and should not be construed as limited to the aspects set forth herein; rather, these aspects are provided so that this disclosure will be thorough and complete. Like numeric designators in the figures and the detailed description refer to like elements throughout.

The various aspects are described herein are in connection with a wireless communication device. A wireless communication device can also be called a subscriber station, a subscriber unit, mobile station, mobile, remote station, access point, remote terminal, access terminal, user terminal, user agent, a user device, or user equipment. A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

Disclosed apparatus, systems and methods of present aspects define a scheme in the R-UIM, SIM/USIM, UICC and other permanent or removable memory modules to store provisioning information to support the feature of individual data application profiles for multiple applications. Also, in some aspects, the disclosed apparatus and methods define a scheme to allow compatible applications to share the same data connection even if they have different application profiles, and to resolve conflicts if two application data profiles are not compatible.

Wireless devices are generally limited to establishing a single data session and, as such, multiple applications are allowed to share the data session. However, this type of multi-application data session does not provide network operators or service providers the ability to differentiate in terms of application usage. Such differentiation is necessary to track usage and, in certain instances, provide differentiated billing for network services based on usage. Present aspects address this concern by providing for individual application profiles in the UIM that include application-specific profile data used to establish a data session for a particular network-service application. In this regard, the network operator and/or service provider is able to differentiate between which network-service application is using a data session and, thus provide for application-specific tracking information that may be used for differentiated service billing and the like.

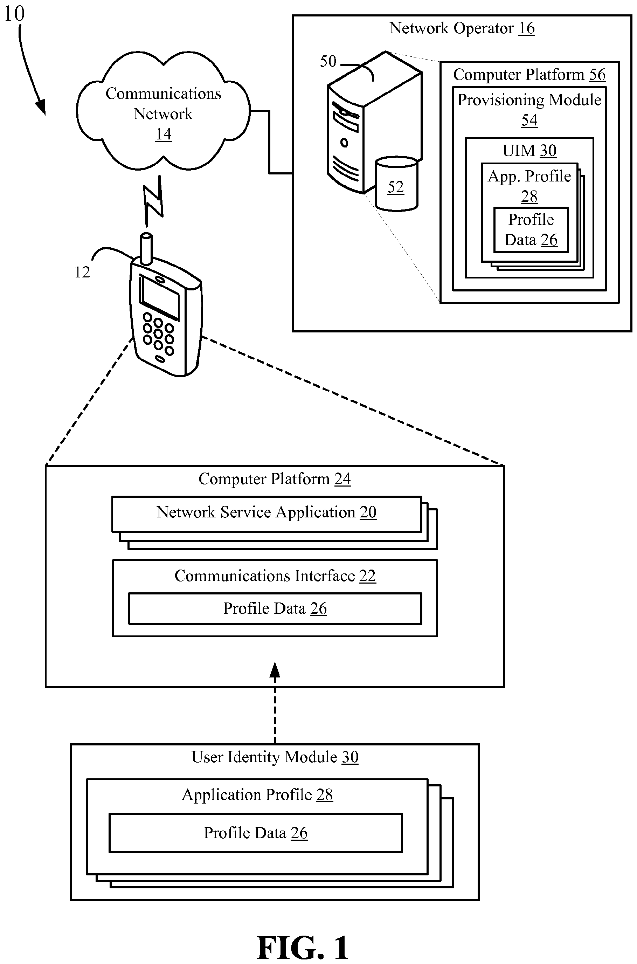

Referring to Fig. 1, in one aspect, a system **10** for establishing differentiated data sessions between applications on a wireless device and a wireless network includes a wireless device **12** operating on a communications network **14** under control of a network operator **16**. Wireless device **12** includes one or more network-service applications **20** and a communications interface **22** stored on a computer platform **24**. The network-service applications **20** may be any application that uses a data session for implementation. For example, the network service application **20** may be an Internet browser application, a Multimedia Message Service (MMS) application, a programming language application, such as Java, available from Sun Microsystems of Santa Clara, California or the like, an open source application development platform, such Binary Run-time Environment for Wireless (BREW®) available form Qualcomm Corporation of San Diego, California or the like, a Location-Based Service (LBS) application, such as a Global Positioning System (GPS) application or the like.

The communications interface **22** establishes a data session with the wireless communications network **14** for one of the plurality of network service applications **20** based an input to launch a particular network service application **20** and specific profile data **26** provided from the corresponding application profile **28** in the User Identity Module (UIM) **30**.

The system **10** additionally includes a User Identity Module **30** that includes provisioning information necessary to allow the device to communicate on communication network **14**. In certain aspects, such as when the wireless device **12** is an open market device, the UIM **30** is a removable UIM, such as a Removable User Identity Card (RUIC), which can be inserted and removed to and from the wireless device **12** to connect to computer platform **24** as dictated by the user of the device. In alternate aspects, such as when the wireless device **12** is a closed market device, the UIM **30** is a non-removable or permanent UIM, such as a SIM, UICC or the like, which is inserted in the device by the network operator **16**, device manufacturer or the like. The UIM **30** serves to identify a user/subscriber and enables the user/subscriber to interface with services of network operator **16**.

The UIM **24** includes a plurality of application profiles **28** that each correspond to one of the plurality of network service applications **20** and that each include profile data **26**. As previously noted, the profile data **26** is used by the communications interface **22** to establish a data session for the corresponding network-service application **20**.

The system **10** additionally, includes a network operator **16** including one or more network devices **50**, such as network servers and associated data storage devices **52** that store provisioning information and, optionally, data session tracking information. In one aspect, the network device **50** includes a computer platform **56** having a provisioning module **54** operable for defining provisioning information for wireless devices and providing the provisioning information to the wireless devices in the form of a User Identity Module (UIM) **30**. Thus, in one aspect, the provisioning module **54** is operable to define and provide a plurality of application profiles **28,** in which each application profile corresponds to a specific network-service application **20** that may be implemented on a wireless communication device **12**. The provisioning module **54** additionally is operable to define and provide each application profile **28** with profile data **26**. The profile data provides for an application-specific data session to be established, by the communications interface **22** of the wireless device **12**, for the corresponding network service application **20**.

Additionally, the provisioning module **50** of wireless device **30** is operable to define and provide for User Identity Modules (UIMs) **30** may take the form of removable cards, such as Removable-User Identity Cards (R-UICs) operable to be inserted into open market wireless devices based on subscriber/user procurement of a card. In other aspects, the UIMs may take the form of a permanent module, such as SIM or the like, that is inserted into the wireless device by the network operator prior to point-of-sale, point-of-lease or the like.

Thus, system **10** advantageously allows for establishing differentiated data sessions between applications on a wireless device and a wireless network.

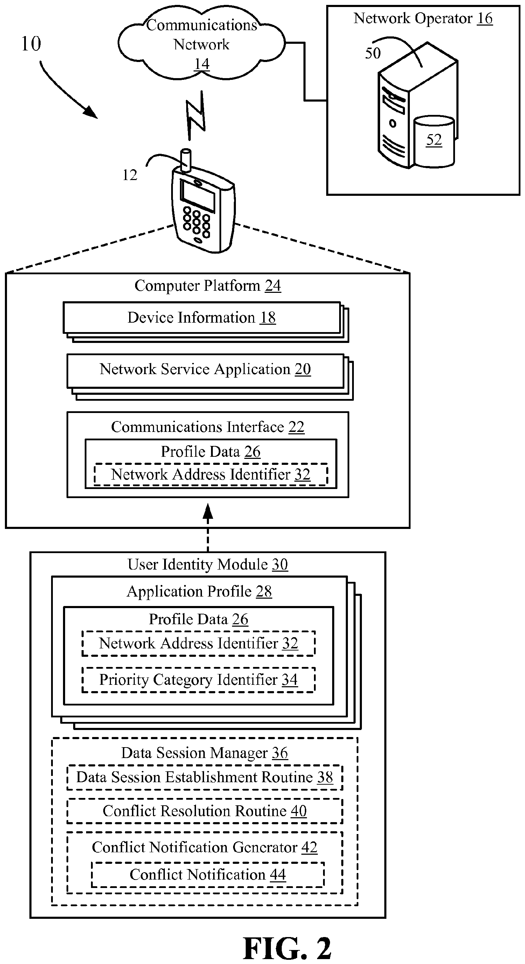

Figure 2 provides for another more detailed aspect of system **10**, in which the system for establishing differentiated data sessions further provides for conflict resolution for network-service applications requesting data session access at the same point in time. As previously described, system **10** includes a wireless device **12** operating on a communications network **14** under control of a network operator **16**. In addition to one or more network-service applications **20** and a communications interface **22**, the computer platform **24** of wireless device **12** may store device information **18**. Device information **18** includes data about the respective wireless communications device, such as, but not limited to, make, model, device identifier such as an electronic serial number (ESN) or a mobile equipment identifier (MEID), a display capability, a software configuration, a firmware configuration, a hardware configuration, an audio capability, and any other wireless device-based information of interest to the operator. Thus, in one aspect, device information **18** may be used to establish and further identify an application-specific data session and certain device information may subsequently be relied upon by the network operator **16** in tracking data session usage or the like.

As previously noted, the communications interface **22** establishes a data session with the wireless communications network **14** for one of the plurality of a network service applications **20** based an input to launch a particular network service application **20** and specific profile data **26** provided from the corresponding application profile **28** in the User Identity Module (UIM) **30**. In certain aspects, the communications interface may establish a data session with the communication network **14** for a network-service application **20** based on an application-specific network address identifier (NAI) **32** stored as profile data **26** in the corresponding application profile **28**. In such aspects, the network-service applications **20** may be configured such that the applications have access to the network address identifier (NAI) **32** used to establish a data session for the network-service applications **20.** In such aspects, the network-service applications **20** provide the NAI **32** to the data service layer and the communications interface **22** establishes the data session. Alternatively, the data services layer may be configured to access the requisite NAI **32,** in the corresponding application profile **28** in the UIM **30**.

As noted, system **10** includes UIM **24** that includes provisioning information necessary to allow the device to communicate on communication network **14**. The UIM **24** includes a plurality of application profiles **28** that each corresponds to one of the plurality of network service applications **20** and include profile data **26.** In certain aspects, the profile data **26** may include a network address identifier (NAI) **32** that may be used by the communications interface **22** to establish a data session for the corresponding network service application **20**.

Additionally, according to some aspects, the profile data **26** of application profiles **28** may include a priority category identifier **34** that identifies the data session priority for the corresponding application **20**. Priority category identifiers **34** may be used in conjunction with data session manager **36**, which may be included in UIM **30** or alternatively, in other aspects, the data session manager may be stored on the wireless device **12**. The data session manager **36** may include a data session establishment routine **38** that is operable to establish data sessions based on the profile data **26** of the application profile **28** corresponding to the network-service application that is currently being launched. The data session manager **36** may additionally include one or more conflict resolution routines **40** that are operable to resolve a conflict in the instances in which a data session is ongoing for a specific network-service application and the user/subscriber desires to launch another network-service application.

In one aspect, the conflict resolution routine **40** may be configured to compare the priority category identifier **34** of the network-service application **20** corresponding to the existing data session to the priority category identifier **34** of the network-service application **20** that the user-subscriber is attempting to launch. The network-service application **20** that has been assigned by the network operator **16** to have the more preferred priority (*e*.*g*. the higher priority) may be given access to the data session. Thus, if the more preferred priority network-service application is associated with the ongoing data session, the ongoing data session may be maintained. However, if the more preferred priority network-service application is associated with the subsequently requested application, the current data session may be shut down and a new data session is established for the subsequently requested application. In the instance in which network-service applications **20** share the same priority category **34**, the conflict resolution routine **40** may be configured to allow both applications to share the existing data session (*i*.*e*., the subsequently requested application is allowed to "piggy-back" on the existing data session). Priority categories are generally defined by the network operator **16** or service provider and may reflect different billing rate categories. Thus, if two network-service applications **20** share the same priority category it may because the applications have the same billing rate. As such, the two applications may be allowed to share the same data session since the billing rate for the usage of the two applications are the same.

The data session manager **36** of UIM **30** may additionally include a conflict notification generator **42** that is operable to generate and communicate a data session conflict notification **44** to the subscriber/user of the wireless device. The conflict notification generator **42** may be preconfigured to generate and communicate notifications to the subscriber/user or, in some aspect, the subscriber/user may be provided a platform to configure the generation and communication of notifications based on personal preferences or the like. In one aspect, in which data sessions are automatically maintained or shut down and another data session established based on the outcome of the priority conflict, the conflict notification generator **42** may send a conflict notification **44** to the subscriber/user that serves to notify them that a data session is being maintained or that the existing data session is being shut-down and a subsequent data session is being established for the currently requested network-service application **20.** In the instance in which the data session is being maintained the conflict notification **44** may additionally notify the subscriber/user that the currently requested network-session is not authorized to launch (based on the application using the existing data session having a preferred priority) or that the currently requested network-session is authorized to launch and communicate in the existing data session (based on the applications having matching priority categories).

In alternate aspects, the conflict notification generator **42** may generate and communicate a notification **44** that provides the user data session options. For example, the notification may provide the subscriber/user a first option to maintain the existing data session and, thus, continue using the network-service application associated with the existing data session or a second option to close the existing data session and establish another data session for the currently requested network-service application. Based on subscriber/user response to the conflict notification **44**, the data session manager **36** may communicate appropriate commands to the communication interface **22** to maintain a data session or to close a data session and establish a new data session.

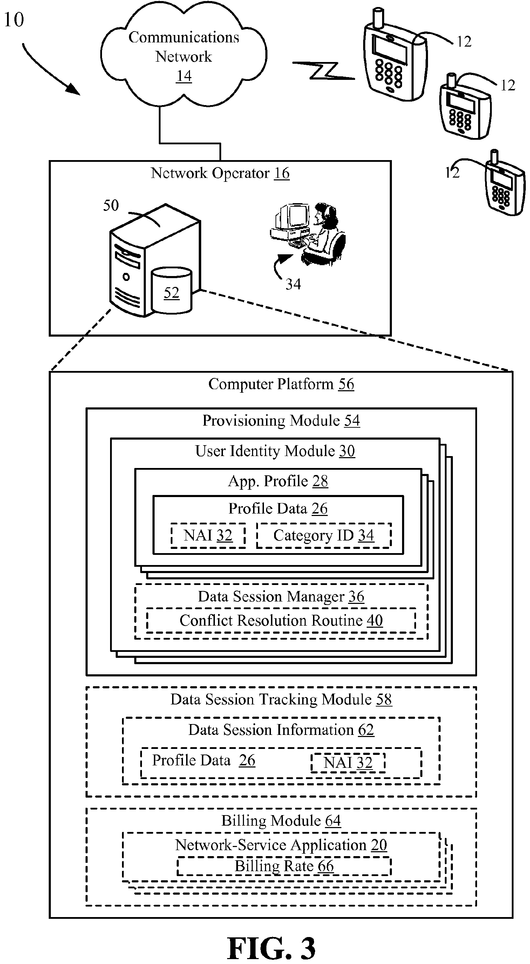

Figure 3 provides for another more detailed aspect of system **10**, illustrating various aspects associated with the network operator **16** and the one or more network devices **50**. As previously described, system **10** includes a network operator **16** including one or more network devices **50**, such as network servers and associated data storage devices **52** that store provisioning information and, optionally, data session tracking information.

As previously noted, in one aspect, the network device **50** includes a computer platform **56** having a provisioning module **54** operable for defining provisioning information for wireless devices and providing the provisioning information to the wireless devices in the form of a User Identity Module (UIM) **30**. Thus, in one aspect, the provisioning module **54** is operable to define and provide a plurality of application profiles **28**, in which each application profile corresponds to a specific network-service application **20** that may be implemented on a wireless communication device **12**. The provisioning module **54** additionally is operable to define and provide each application profile **28** with profile data **26**. The profile data provides for an application-specific data session to be established, by the communications interface **22** of the wireless device **12**, for the corresponding network service application **20**. In certain aspects, the profile data may include a Network Address Identifier (NAI) **32** and/or a priority category identifier **34.**

The provisioning module **54** of network device **50** may also define and provide for the data session manager **36**. As previously noted, the data session manager may be stored on the wireless device **12** or the data session manager **36** may be included within the user identity module **30**. In certain aspects, the data session manager 36 may define and provide for one or more conflict resolution routines **40** operable for resolving a data session conflict between a first network-service application **20** using an existing data session and a second network-service application **20** concurrently requesting access to a data session. In certain aspects, the subscriber/user may be provided with more than one conflict resolution routine **40** based on the wireless device providing the ability for user configuration. For example, the wireless device may provide for the user/subscriber to choose between an automatic conflict resolution routine or a subscriber/user option routine that allows the user to choose the application/data session they desire to go forward with.

Additionally, the provisioning module **54** of wireless device **30** is operable to define and provide for User Identity Modules (UIMs) **30** may take the form of removable cards, such as Removable-User Identity Cards (R-UICs) operable to be inserted into open market wireless devices based on subscriber/user procurement of a card. In other aspects, the UIMs may take the form of a permanent module, such as SIM or the like, that is inserted into the wireless device by the network operator prior to point-of-sale, point-of-lease or the like. The UIMs may include the Application profiles **28** and, in some aspects, the data session manager **36** and corresponding conflict resolution routines **40.**

Additionally, network operator **16** is operable to monitor, at network device **30** or another network device, the established data sessions, including tracking the profile data **26**, such as the network address **32**, associated with each session. Thus, network device **30** may include data session tracking module **60** operable for receiving and storing, at data storage **32** or the like, data session information **62**. The data session information may include, but is not limited to, profile data **26**, such as the NAI **32** and the like. In addition, data session information **62** may include device information **18** or any other information related to the data session. The data session information **62** may be stored in data storage **32**, in relation to a respective network-service application, in relation to a respective user/subscriber or wireless device, and/or in relation to a respective wireless communication network. As such, a predetermined party **34**, such as a billing entity, marketing, network design, or customer care representative authorized by network operator **16**, may utilize the data session information data for one or more of bill generation, network planning activities, marketing activities, troubleshooting activities, etc.

In one specific aspect, the network device **50** of system **10** may include a billing module **64** operable to provide network-service billing based on the data session tracking information **62**. As such the billing module **64** may be operable to provide differentiated billing whereby each network-service application **20**, as defined by the corresponding assigned network address **32**, which is determined in the data session tracking information **62**, corresponds to a specific billing rate **66.**

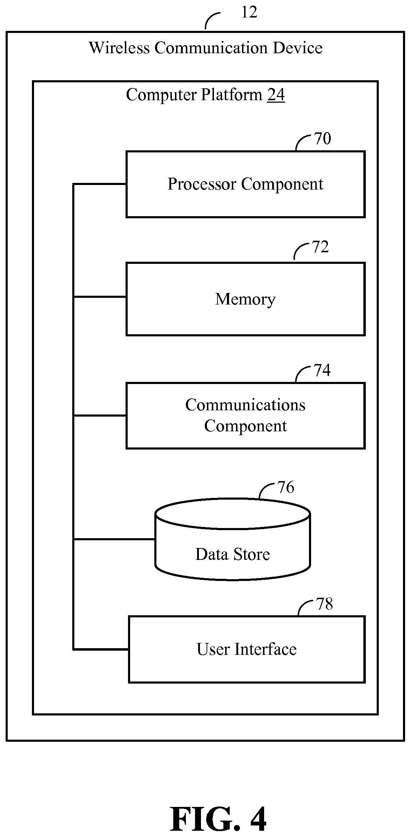

Referring to Fig. 4, in one aspect, wireless communications device 12 includes a mobile communication device operable on a wireless communication system. As can be appreciated, there are a variety of wireless communication systems, which often employ different spectrum bandwidths and/or different air interface technologies. Exemplary systems include CDMA (CDMA 2000, EV DO, WCDMA), OFDM, or OFDMA (Flash-OFDM, 802.20, WiMAX), FDMA/TDMA (GSM) systems using FDD or TDD licensed spectrums, peer-to-peer (*e*.*g*., mobile-to-mobile) *ad hoc* network systems often using unpaired unlicensed spectrums, and 802.xx wireless LAN or BLUETOOTH techniques.

Wireless communications device **12** includes processor component **70** for carrying out processing functions associated with one or more of components and functions described herein. Processor component **70** can include a single or multiple set of processors or multi-core processors. Moreover, processing component **70** can be implemented as an integrated processing system and/or a distributed processing system.

Wireless communications device **12** further includes a memory **72**, such as for storing local versions of applications being executed by processor component **70**. Memory **72** can include random access memory (RAM), read only memory (ROM), and a combination thereof. Additionally, in some aspects (not shown in Fig. 4), memory **72** includes wireless device information **18** and/or network-service applications **20**.

Further, wireless communications device **12** includes a communications component **74** that provides for establishing and maintaining communications with one or more parties utilizing hardware, software, and services as described herein. Communications component **74** may carry communications between components on wireless communications device **12**, as well as between wireless communications device **12** and external network devices **30**, such as devices located across a communications network and/or devices serially or locally connected to wireless communications device **12**. In some aspects (not shown in Fig. 4), communications component **74** may include communications interface **22.**

Additionally, wireless communications device **12** may further include a data store **76**, which can be any suitable combination of hardware and/or software that provides for mass storage of information, databases, and programs employed in connection with aspects described herein. Optionally, in some aspects, data store **76** may include wireless device information **18** and/or network-service applications **20**.

Wireless communications device **12** may additionally include a user interface component **78** operable to receive inputs from a user of wireless communications device **12**, and to generate outputs for presentation to the user. User interface component **78** may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component **78** may include one or more output devices, including but not limited to a display, a speaker, a haptic feedback mechanism, a printer, any other mechanism capable of presenting an output to a user, or any combination thereof. In accordance with present aspects, the interface component **78** may include requisite inputs for launching network-service applications **20**, displays for displaying conflict resolution notifications **44** and inputs for providing responses to options provided in conflict resolution notifications **44**. None of the specific interface components are shown in Fig. 4 for the sake of brevity.

Referring to Fig. 4, in one aspect, network device **30** is operable to communicate with, provide provisioning information in the form of a UIM and/or monitor actions of wireless communication device **12** (Fig. 3), for example, to support the operations of wireless device **12** on a wireless communications network. Network device **30** includes any type of network-based communication device, such as a network server operable on a communication network **14**. Communication network **14** may be a wired or wireless communication system, or a combination of both, and includes the wireless network on which wireless device **12** operates.

Network device **30** includes a processor component **80** for carrying out processing functions associated with one or more of components and functions described herein. Processor component **80** can include a single or multiple set of processors or multi-core processors. Moreover, processor component **80** can be implemented as an integrated processing system and/or a distributed processing system.

Network device **30** further includes a memory **82**, such as for storing local versions of applications being executed by processor component **80**. Memory **82** can include random access memory (RAM), read only memory (ROM), and a combination thereof. Optionally, in some aspects, memory **82** includes data collected in association with the operation of wireless device, such as date session tracking-related data **62**, or provisioning information, such as application profiles **28**, profile data **26** and the like.

Further, network device **30** includes a communications component **84** that provides for establishing and maintaining communications with one or more parties utilizing hardware, software, and services as described herein. Communications component **84** may carry communications between components on network device **30**, as well as between network device **30** and external devices, such as wireless communication device **12**, and including devices located across communications network **14** and/or devices serially or locally connected to network device **30**. In one aspect, communications component **84** is operable for receiving data session tracking information from the wireless devices and the like.

Additionally, network device **30** may further include database **32**, which can be any suitable combination of hardware and/or software that provides for mass storage of information, databases, and programs employed in connection with aspects described herein. In certain aspects, database **32** may store the application profiles **28**, the profile data **26**, such as the NAIs **32** and the priority category identifiers **34**, as well as the data session tracking module **58** and/or the billing module **64**.

Network device **30** may additionally include a user interface component **86** operable to receive inputs from a user of network device **30**, and to generate outputs for presentation to the user. User interface component **86** may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component **86** may include one or more output devices, including but not limited to a display, a speaker, a haptic feedback mechanism, a printer, any other mechanism capable of presenting an output to a user, or any combination thereof.

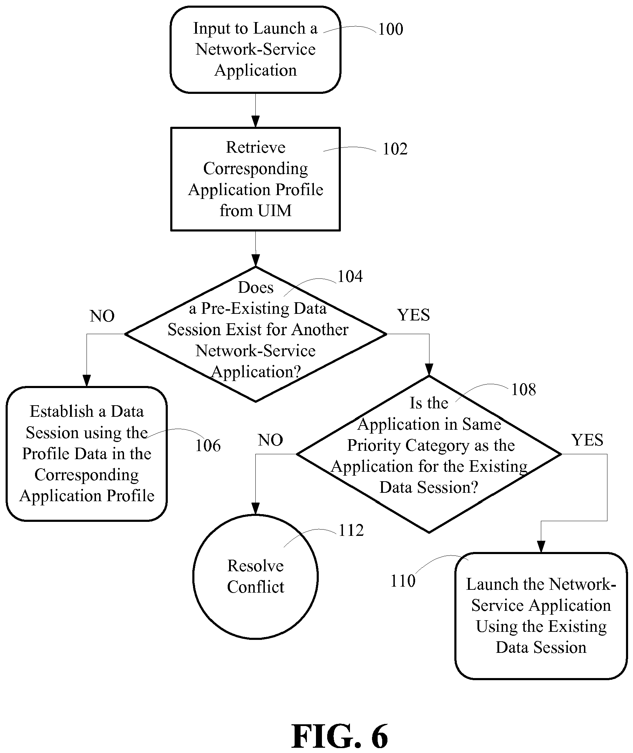

Referring to Fig. 6, a flow diagram is depicted of a methodology for launching a network-service application, in accordance with an aspect of the present innovation. At Event **100**, an input is received by the wireless device that is associated with launching a network service application and, at Event **102**, the corresponding application profile is retrieved from the UIM. As previously noted, the application profile will include profile data that defines the rules and provides the necessary information for establishing a data session for the network-service application that is attempting to be launched.

At Decision **104**, a determination is made as to whether a pre-existing data session exists for another network-service application. If a determination is made that a pre-existing data session does not exists, then at Event **106**, a data session is established for the application being launched using the profile data, such as the NAI or the like, in the retrieved application profile. If a determination is made that a pre-existing data session does exist, then at Decision **108**, a determination is made as to whether the application is being launched has the same priority category identifier as the application or applications that are currently using the pre-existing data sessions. It should be noted that the data session may have an appropriately assigned priority category based on the priority category identifier in the application profile associated with the network-service application that is using the pre-existing application. If a determination is made that the application or applications using the data session have the same priority category identifier as the application being launched, then at Event **110**, the application is allowed to launch using the pre-existing data session. In one aspect of the innovation, network-service applications may be assigned the priority category and thus the application profiles will indicate the same priority category identifiers if the usage of the network-service applications utilize identical tracking. For example, if two or more network-service applications are billed at the same billing rate, the applications having the same billing rate may be assigned the same priority category and use of the existing data session may be shared because the billing rate for the applications is the same.

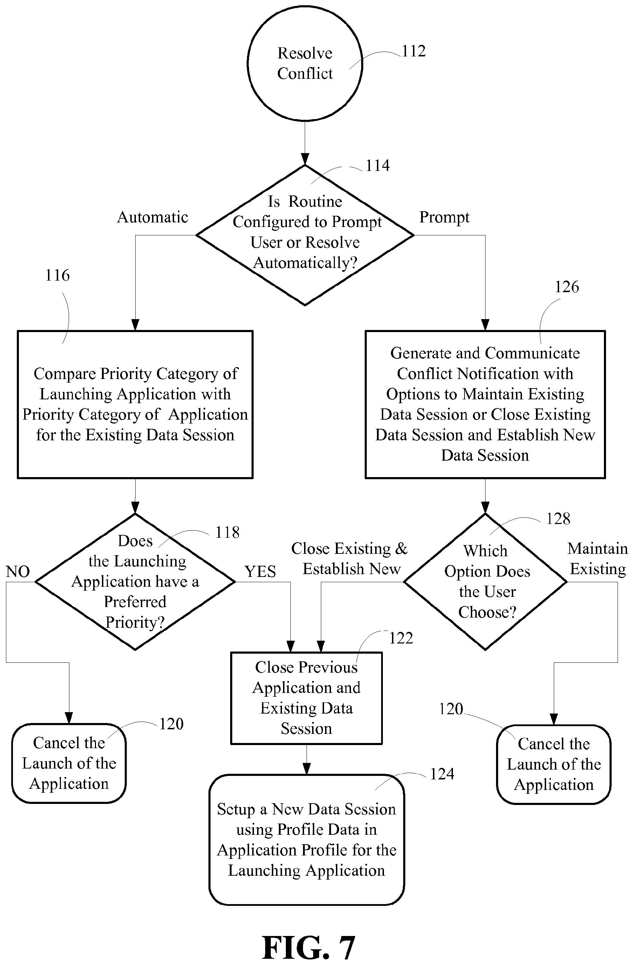

If a determination is made that the application or applications using the data session do not have the same priority category, then at Event **112**, a data session conflict is identified and conflict resolution will ensue. One methodology for data session conflict resolution is provided for in the flow diagram of Fig. 7, according to another aspect of the present innovation. After a conflict has been identified at Event **112**, then at Decision **114**, a determination is made as to whether the routine is configured to prompt the user with conflict resolution options or whether the routine automatically resolves the conflict based on the priority categories of the competing applications. It should be noted that routine may be either be pre-configured by the network operator or configured as need be by the subscriber/user to provide for either automatic conflict resolution or subscriber/user option conflict resolution.

If the determination is made that the routine is configured to perform automatic conflict resolution, then at Event **116**, the priority category of the application being launched is compared to the priority category of the application(s) using the pre-existing data session and, then at Decision **118**, a determination is made as to whether the application that is being launched has a more preferred priority (*e*.*g*. higher priority) than the application(s) using the pre-existing data session. If the application being launched does not have a more preferred priority, then at Event **120**, the launch of the application is cancelled, the pre-existing data session is maintained and only the application(s) currently using the data session is/are allowed to continue using the data session. In addition, cancellation of the launch of the application may provide for a conflict notification to be sent to the subscriber/user notifying them of the cancellation. In turn, if the subscriber/user desires to override the automatic conflict resolution the user may manually teardown the existing data session and establish the data session for the application that had the launch cancelled.

If the application being launched does have a more preferred priority, then at Event **122**, the pre-existing data session is automatically closed and the application(s) that were using the pre-existing data session are automatically closed. At Event **124**, a new data session is automatically established for the application being launched using the profile data, such as the NAI or the like, in the application profile of the UIM. In addition, automatically closing the pre-existing data session and establishing a new data session may provide for a conflict notification to be sent to the subscriber/user notifying them of the closing of the pre-existing data session and establishment of the new data session. In turn, if the subscriber/user desires to override the automatic conflict resolution the user may manually teardown the new data session and re-establish a new data session associated with applications that were using the pre-existing data session.

Returning to Decision **114**, if a determination is made that routine is configured to prompt the subscriber/user with conflict resolution options, then at Event **126**, a conflict notification is generated and communicated to the subscriber/user that provides an option for maintaining the pre-existing data session and an option for closing the existing data session and establishing a new data session. At Decision **128**, the subscriber/user determines which option they choose. If the subscriber user chooses to maintain the pre-existing data session, then at Event **120**, the launch of the application is cancelled, the pre-existing data session is maintained and only the application(s) currently using the data session is/are allowed to continue using the data session. If the subscriber/user chooses to close the existing data session and establish a new data session, then at Event **122**, the pre-existing data session is closed and the application(s) that were using the pre-existing data session are automatically closed. At Event **124**, a new data session is established for the application being launched using the profile data, such as the NAI or the like, in the application profile of the UIM.

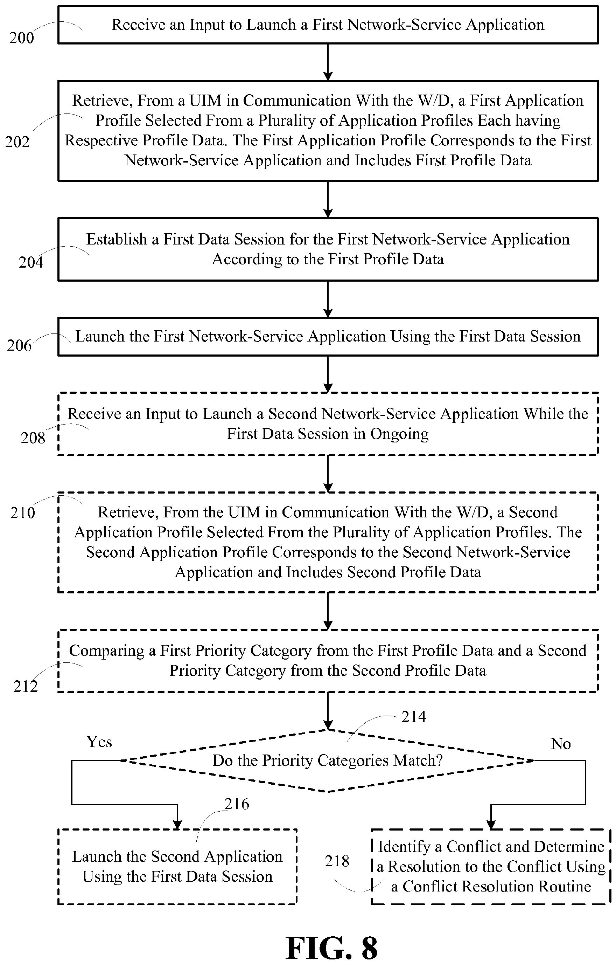

Fig. 8 is another flow diagram of a methodology for differentiated data session access on a wireless device, according to another aspect of the present innovation. At Event **200**, the wireless device receives an input to launch a first network-service application and, based on the input. The network service application may include an Internet browser application, a MMS application, a JAVA application, a BREW application, A LBS application or the like. At Event **202**, the wireless device retrieves, from a User Identity Module (UIM) in communication with the wireless device, a first application profile selected from a plurality of application profiles, each profile having respective profile data. The first application profile corresponds to the first network - service application and includes first profile data. In one aspect of the method, the profile data includes a network address identifier (NAI) that associates a network address with the network-service application.

At Event **204**, the wireless device establishes a first data session for the first network-service application according to the first profile data. In one aspect, in which the profile data includes the NAI, the data session is established according to the NAI associated with the network-service application. At Event **206**, the first network-service application is launched using the established first data session.

In optional aspects, the method may additionally include, at Event **208**, receiving an input to launch a second network-service application while the first data session is ongoing. Based on receipt of the input, at Event **210**, the wireless device retrieves, from the User Identity Module (UIM), a second application profile selected from a plurality of application profiles. The second application profile corresponds to the second network -service application and includes second profile data. At Event **212**, the first priority category from the first profile data is compared to the second priority category from the second profile data. At Decision **214**, based on the comparison, a determination is made as to whether the first and second priority categories match. If a determination is made that the priority categories match, then at Event **216**, the second network-service application is launched using the first data session. Alternatively, if a determination is made that the priority categories do not match, then at Event **218**, a conflict is identified and a resolution to the conflict is determined using a predetermined conflict resolution routine. The predetermined conflict resolution routine may automatically maintain the first data session or close the first data session and establish the second data session based on which priority category is determined to be preferred. Alternatively, the predetermined conflict resolution routine may prompt the subscriber user with options for maintaining the first session or closing the first data session and establishing the second data session.

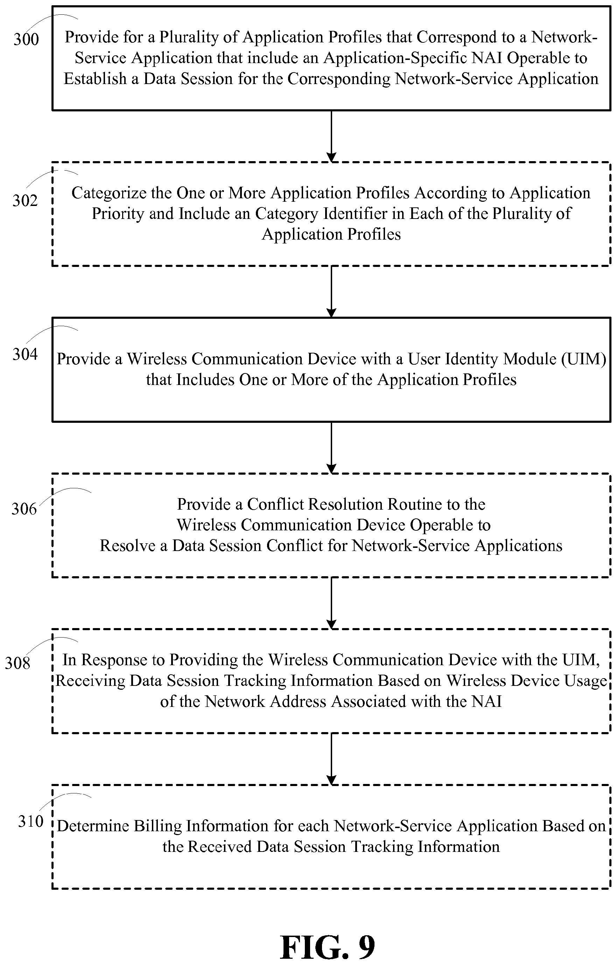

Fig. 9 is another flow diagram of a methodology for provisioning wireless devices at a network device, according to another aspect of the present innovation. At Event **300**, the network device defines and provides for a plurality of application profiles that correspond to network-service applications and include an application-specific network address identifier operable to establish a data session for the corresponding network-service application. At optional Event **302**, the network device additionally defines and provides for categorizes for the plurality of application profiles according to application priority and includes a category identifier in each of the plurality of application profiles.

At Event **304**, the network devices provides for a User Identity Module (UIM) that includes one or more of the application profiles. The application profiles will define the network-service application that the subscriber is authorized to use on a wireless device. At optional Event **306**, the network device may additionally define and provide for a conflict resolution routine that may provided directly to the wireless device or included within the UIM, the conflict resolution routine is operable to resolve a data session conflict for two or more network-service applications requesting a data session at the same time and which are not authorized to share a data session due to conflicting, *i*.*e*., non-matching, priority categories.

In addition, the method may include optional Event **308**, such that, in response to providing the UIM to a wireless device, receives from the device data session tracking information based on the data session usage of the network address associated with the NAI for a specific network-service application. At additional optional Event **310**, the network device may determine billing information for each data session and/or network-service application based on the received data session tracking information. In this regard, the network device may be configured to provide differentiated billing for network-service application on a per data session basis.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, *e*.*g*., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Thus, present aspects provide for methods, systems and apparatus for providing differentiated data session access in a wireless device. User Identity Modules (UIMs) are provisioned such that network-service applications resident on the wireless device are associated with a corresponding user profile within the UIM. Each network-service application has a corresponding network address identifier defined within the user profile. The network address associated with the identifier is user to establish a data session for the corresponding network service application. By providing for application-specific network addresses, service providers and/or network operators can differentiate between what services a user is accessing during a data session. This provides for a tracking mechanism that may be used by the service provider or network operator to differentiate the billing rates associated with services. In addition, the UIMs may be provisioned with priority category identifiers that allow the associated network-service application to be prioritized for data session establishment.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method of differentiated data session access on a wireless communication device (12), comprising:
receiving (200) an input to launch a first network-service application;
**characterised by**
retrieving (202), from a user identity module (30) in communication with the wireless communication device (12), a first application profile (28) selected from a plurality of application profiles each corresponding to a network-service application and having respective profile data (26) including an application-specific network address identifier (32), wherein the first application profile (28) corresponds to the first network-service application and comprises first profile data (26);
establishing (204) a first data session for the first network-service application according to the first profile data (26); and
launching (206) the first network-service application using the first data session.

2. The method of claim 1, wherein retrieving the first application profile further comprises retrieving the first application profile that corresponds to the first network service application and comprises first profile data including a first network address identifier (32).

3. The method of claim 2, wherein establishing a first data session for the first application further comprises establishing a first data session for the first application based on the first network address identifier (32).

4. The method of claim 1, further comprising:
receiving (208) an input to launch a second network-service application while the first data session is ongoing;
retrieving (210), from the user identity module (30), a second application profile selected from the plurality of application profiles, wherein the second application profile corresponds to the second network-service application and comprises second profile data;
comparing (212) a first priority category from the first profile data and a second priority category from the second profile data; and
if the comparison results in the first priority category matching (214) the second priority category, then launching (216) the second application using the first data session.

5. The method of claim 1, further comprising:
receiving (208) an input to launch a second network-service application while the first data session is ongoing;
retrieving (210), from the user identity module, a second application profile selected from the plurality of application profiles, wherein the second application profile corresponds to the second network-service application and comprises second profile data;
comparing (212) a first priority category from the first profile data and a second priority category from the second profile data;
identifying (218) a conflict if the comparison results in the first application category not matching (214) the second application category; and
determining a resolution to the conflict based on a predetermined resolution routine.

6. An apparatus for providing differentiated data session access on a wireless communication device (30), comprising:
means for receiving an input to launch a first network-service application
**characterised by**
means for retrieving, from a user identity module in communication with the wireless communication device, a first application profile selected from a plurality of application profiles each corresponding to a network-service application and having respective profile data including an application-specific network address identifier, wherein the first application profile corresponds to the first network-service application and comprises first profile data;
means for establishing a first data session for the first network-service application according to the first profile data; and
means for launching the first network-service application using the first data session.

7. The apparatus of claim 6, wherein the apparatus comprises at least one processor, and wherein
the means for receiving comprises a first module,
the means for retrieving comprises a second module,
the means for establishing comprises a third module, and
the means for launching comprises a fourth module.

8. A method for provisioning a wireless device (12) at a network device (50), comprising:
defining a plurality of application profiles that each corresponds to a network-service application and includes an application-specific network address identifier (32) operable for establishing a data session for the corresponding network-service application; and
providing (300) a wireless communication device (12) with a user identity module (30) that includes a plurality of the application profiles.

9. The method of claim 8, further comprising, in response to providing the wireless communication devices with a user identity module (30), receiving data session tracking information (62) based on wireless device usage of a network address associated with the network address identifier (32).

10. The method of claim 8, further comprising categorizing (302) the one or more application profiles according to application priority and providing for a priority category identifier in each of the plurality of application profiles.

11. The method of claim 10, further comprising providing (306) a conflict resolution routine that is operable to resolve a data session conflict for network-service applications based on the priority category identifiers in the application profiles and providing for the conflict resolution routine in the user identity module.

12. A computer program product, comprising:
a computer-readable medium comprising:
a set of codes for causing at least one computer to perform a method according to one of the claims 1 to 5 or 8 to 11 when executed.

13. An apparatus (50) for providing differentiated data session access on a wireless communication device (12), comprising:
means for defining a plurality of application profiles that each corresponds to a network-service application and includes an application-specific network address identifier operable for establishing a data session for the corresponding network-service application; and
means for providing a wireless communication device with a user identity module that includes a plurality of the application profiles.

14. The apparatus of claim 13, wherein the apparatus comprises at least one processor, and wherein the means for providing for a plurality of application profiles comprises a first module and the means for providing a wireless communication device with a user identity module comprises a second module.

## Patentansprüche

1. Verfahren zum differenzierten Datensitzungs-Zugang eines drahtlosen Kommunikationsgeräts (12), umfassend:
Empfangen (200) einer Eingabe, um eine erste Netzwerkdienst-Anwendung zu starten;
**gekennzeichnet durch** Auslesen (202) aus einem Benutzer-Identitäts-Modul (30), das in Kommunikation mit dem drahtlosen Kommunikationsgerät (12) ist, eines ersten Anwendungsprofils (28), welches aus mehreren Anwendungsprofilen ausgewählt wurde, die einer Netzwerkdienst-Anwendung entsprechen und jeweils entsprechende Profildaten (26) haben, einschließlich eines anwendungs-spezifischen Netzwerkadressen-Identifikators (32), wobei das erste Anwendungsprofil (28) der ersten Netzwerkdienst-Anwendung entspricht und erste Profildaten (26) umfasst;
Einrichten (204) einer ersten Datensitzung für die erste Netzwerkdienst-Anwendung gemäß den ersten Profildaten (26); und
Starten der ersten Netzwerkdienst-Anwendung unter Verwendung der ersten Datensitzung.

2. Verfahren gemäß Anspruch 1, wobei das Auslesen des ersten Anwendungsprofils weiterhin das Auslesen des ersten Anwendungsprofils umfasst, welches der ersten Netzwerkdienst-Anwendung entspricht und erste Profildaten einschließlich eines ersten Netzwerkadressen-Identifikators (32) umfasst.

3. Verfahren gemäß Anspruch 2, wobei das Einrichten einer ersten Datensitzung für die erste Netzwerkdienst-Anwendung weiterhin umfasst das Einrichten einer ersten Datensitzung für die erste Netzwerkdienst-Anwendung basierend auf dem ersten Netzwerkadressen-Identifikator (32).

4. Verfahren gemäß Anspruch 1, weiterhin umfassend:
Empfangen (208) einer Eingabe, um eine zweite Netzwerkdienst-Anwendung zu starten, während die erste Datensitzung andauert;
Auslesen (210), von dem Benutzer-Identitäts-Modul (30) eines zweiten Anwendungsprofils, das aus den mehreren Anwendungsprofilen ausgewählt wurde, wobei das zweite Anwendungsprofil der zweiten Netzwerkdienst-Anwendung entspricht und zweite Profildaten umfasst;
Vergleichen (212) einer ersten Prioritäts-Kategorie aus den ersten Profildaten mit einer zweiten Prioritäts-Kategorie aus den zweiten Profildaten; und
wenn die Vergleichsergebnisse in der ersten Prioritäts-Kategorie zu der zweiten Prioritäts-Kategorie passen, dann Starten (216) der zweiten Anwendung unter Verwendung der ersten Datensitzung.

5. Verfahren gemäß Anspruch 1, weiterhin umfassend:
Empfangen (208) einer Eingabe, um eine zweite Netzwerkdienst-Anwendung zu starten während die erste Datensitzung andauert;
Auslesen (210), von dem Benutzer-Identitäts-Modul (30) eines zweiten Anwendungsprofils, das aus den mehreren Anwendungsprofilen ausgewählt wurde, wobei das zweite Anwendungsprofil der zweiten Netzwerkdienst-Anwendung entspricht und zweite Profildaten umfasst;
Vergleichen (212) einer ersten Prioritäts-Kategorie aus den ersten Profildaten mit einer zweiten Prioritäts-Kategorie aus den zweiten Profildaten;
Identifizieren (218) eines Konflikts, wenn die Vergleichsergebnisse in der ersten Anwendungskategorie nicht zu der zweiten Anwendungskategorie passen (214); und
Bestimmen einer Lösung des Konflikts basierend auf einer vorbestimmten Lösungs-Routine.

6. Vorrichtung zum Bereitstellen eines differenzierten Datensitzungs-Zugangs eines drahtlosen Kommunikationsgeräts (30), umfassend:
Mittel zum Empfangen einer Eingabe, um eine erste Netzwerkdienst-Anwendung zu starten;
**gekennzeichnet durch** Mittel zum Auslesen aus einem Benutzer-Identitäts-Modul, das in Kommunikation mit dem drahtlosen Kommunikationsgerät ist, eines ersten Anwendungsprofils, welches aus mehreren Anwendungsprofilen ausgewählt wurde, die jeweils einer Netzwerkdienst-Anwendung entsprechen und entsprechende Profildaten haben, einschließlich eines anwendungs-spezifischen Netzwerkadressen-Identifikators, wobei das erste Anwendungsprofil der ersten Netzwerkdienst-Anwendung entspricht und erste Profildaten umfasst;
Mittel zum Einrichten einer ersten Datensitzung für die erste Netzwerkdienst-Anwendung gemäß den ersten Profildaten; und
Mittel zum Starten der ersten Netzwerkdienst-Anwendung unter Verwendung der ersten Datensitzung.

7. Vorrichtung gemäß Anspruch 6, wobei die Vorrichtung wenigstens einen Prozessor umfasst, und wobei
das Mittel zum Empfangen ein erstes Modul umfasst,
das Mittel zum Auslesen ein zweites Modul umfasst,
das Mittel zum Einrichten ein drittes Modul umfasst, und
das Mittel zum Starten ein viertes Modul umfasst.

8. Verfahren zur Bereitstellung eines drahtlosen Geräts (12) bei einem Netzwerkgerät (50), umfassend:
Definieren mehrerer Anwendungsprofile, welche jeweils einer Netzwerkdienst-Anwendung entsprechen und einen anwendungs-spezifischen Netzwerk Adressen-Identifikator beinhalten, der verwendbar ist zum Einrichten einer Datensitzung für die entsprechende Netzwerkdienst-Anwendung; und
Bereitstellen (300) eines drahtlosen Kommunikationsgeräts (12) mit einem Benutzer-Identitäts-Modul (30), welches mehrere der Anwendungsprofile enthält.

9. Verfahren gemäß Anspruch 8 weiterhin umfassend, in Antwort auf das Bereitstellen der drahtlosen Kommunikationsgeräte mit einem Benutzer-Identitäts-Modul (30), Empfangen von Datensitzungs-Nachverfolgungs-Information (62) basierend auf der Benutzung einer Netzwerkadresse durch ein drahtloses Gerät in Verbindung mit dem Netzwerkadressen-Identifikator (32).

10. Verfahren gemäß Anspruch 8, weiterhin umfassend Kategorisieren (302) des einen oder der mehreren Anwendungsprofile entsprechend einer Anwendungs-Priorität und Bereitstellen eines Prioritäts-Kategorie-Identifikators in jedem der mehreren Anwendungsprofile.

11. Verfahren gemäß Anspruch 10, weiterhin umfassend Bereitstellen (306) einer Konfliktlösungs-Routine, die verwendbar ist, um einen Datensitzungs-Konflikt für Netzwerk-Dienst-Anwendungen zu lösen basierend auf den Prioritäts-Kategorie-Identifikatoren in den Anwendungsprofilen und Bereitstellen der Konfliktlösungs-Routine in dem Benutzer-Identitäts-Modul.

12. Computerprogramm-Produkt, umfassend:
computer-lesbares Medium, umfassend:
einen Codesatz, um wenigstens einen Computer dazu zu veranlassen, ein Verfahren gemäß einem der Ansprüche 1 bis 5 oder 8 bis 11 durchzuführen, wenn er ausgeführt wird.

13. Vorrichtung (50) zum Bereitstellen eines differenzierten Datensitzung-Zugangs eines drahtlosen Geräts (12), umfassend:
Mittel zum Definieren mehrerer Anwendungsprofile, welche jeweils einer Netzwerkdienst-Anwendung entsprechen und einen anwendungs-spezifischen Netzwerk Adressen-Identifikator beinhalten, der verwendbar ist zum Einrichten einer Datensitzung für die entsprechende Netzwerkdienst-Anwendung; und
Mittel zum Bereitstellen eines drahtlosen Kommunikationsgeräts (12) mit einem Benutzer-Identitäts-Modul, welches mehrere der Anwendungsprofile enthält.

14. Vorrichtung gemäß Anspruch 13, wobei die Vorrichtung wenigstens einen Prozessor umfasst, und wobei das Mittel zum Bereitstellen mehrerer Anwendungsprofile ein erstes Modul umfasst und das Mittel zum Bereitstellen eines drahtlosen Kommunikationsgeräts mit einem Benutzer-Identitäts-Modul ein zweites Modul umfasst.

## Revendications

1. Procédé d'accès différencié à une session de données sur un dispositif de communication sans fil (12), comprenant :
la réception (200) d'une entrée pour lancer une première application de service réseau ;
**caractérisé par**
la récupération (202), à partir d'un module d'identité d'utilisateur (30) en communication avec le dispositif de communication sans fil (12), d'un premier profil d'application (28) choisi parmi une pluralité de profils d'application correspondant chacun à une application de service réseau et ayant des données de profil (26) respectives incluant un identifiant d'adresse de réseau spécifique de l'application (32), dans lequel le premier profil d'application (28) correspond à la première application de service réseau et comprend des premières données de profil (26) ;
l'établissement (204) d'une première session de données pour la première application de service réseau selon les premières données de profil (26) ; et
le lancement (206) de la première application de service réseau à l'aide de la première session de données.

2. Procédé selon la revendication 1, dans lequel la récupération du premier profil d'application comprend en outre la récupération du premier profil d'application qui correspond à la première application de service réseau et comprend des premières données de profil incluant un premier identifiant d'adresse de réseau (32).

3. Procédé selon la revendication 2, dans lequel l'établissement d'une première session de données pour la première application comprend en outre l'établissement d'une première session de données pour la première application d'après le premier identifiant d'adresse de réseau (32).

4. Procédé selon la revendication 1, comprenant en outre :
la réception (208) d'une entrée pour lancer une seconde application de service réseau tandis que la première session de données est en cours ;
la récupération (210), à partir du module d'identité d'utilisateur (30), d'un second profil d'application choisi parmi la pluralité de profils d'application, dans lequel le second profil d'application correspond à la seconde application de service réseau et comprend des secondes données de profil ;
la comparaison (212) d'une première catégorie de priorité des premières données de profil et d'une seconde catégorie de priorité des secondes données de profil ; et
si la comparaison résulte en une concordance (214) de la première catégorie de priorité et de la seconde catégorie de priorité, alors le lancement (216) de la seconde application à l'aide de la première session de données.

5. Procédé selon la revendication 1, comprenant en outre :
la réception (208) d'une entrée pour lancer une seconde application de service réseau tandis que la première session de données est en cours ;
la récupération (210), à partir du module d'identité d'utilisateur, d'un second profil d'application choisi parmi la pluralité de profils d'application, dans lequel le second profil d'application correspond à la seconde application de service réseau et comprend des secondes données de profil ;
la comparaison (212) d'une première catégorie de priorité des premières données de profil et d'une seconde catégorie de priorité des secondes données de profil ;
l'identification (218) d'un conflit si la comparaison résulte en une non-concordance (214) de la première catégorie d'application et de la seconde catégorie d'application ; et la détermination d'une résolution pour le conflit d'après une routine de résolution prédéterminée.

6. Appareil de fourniture d'un accès différencié à une session de données sur un dispositif de communication sans fil (30), comprenant :
un moyen de réception d'une entrée pour lancer une première application de service réseau ;
**caractérisé par**
un moyen de récupération, à partir d'un module d'identité d'utilisateur en communication avec le dispositif de communication sans fil, d'un premier profil d'application choisi parmi une pluralité de profils d'application correspondant chacun à une application de service réseau et ayant des données de profil respectives incluant un identifiant d'adresse de réseau spécifique de l'application, dans lequel
le premier profil d'application correspond à la première application de service réseau et comprend des premières données de profil ;
un moyen d'établissement d'une première session de données pour la première application de service réseau selon les premières données de profil ; et
un moyen de lancement de la première application de service réseau à l'aide de la première session de données.

7. Appareil selon la revendication 6, dans lequel l'appareil comprend au moins un processeur, et dans lequel
le moyen de réception comprend un premier module,
le moyen de récupération comprend un deuxième module,
le moyen d'établissement comprend un troisième module, et
le moyen de lancement comprend un quatrième module.

8. Procédé d'approvisionnement d'un dispositif sans fil (12) au niveau d'un dispositif de réseau (50), comprenant :
la définition d'une pluralité de profils d'application dont chacun correspond à une application de service réseau et inclut un identifiant d'adresse de réseau spécifique de l'application (32) opérationnel pour établir une session de données pour l'application de service réseau correspondante ; et
la fourniture (300) à un dispositif de communication sans fil (12) d'un module d'identité d'utilisateur (30) qui inclut une pluralité des profils d'application.

9. Procédé selon la revendication 8, comprenant en outre, en réponse à la fourniture aux dispositifs de communication sans fil d'un module d'identité d'utilisateur (30), la réception d'informations de suivi de session de données (62) d'après une utilisation de dispositif sans fil d'une adresse de réseau associée à l'identifiant d'adresse de réseau (32).

10. Procédé selon la revendication 8, comprenant en outre la catégorisation (302) des un ou plusieurs profils d'application selon une priorité d'application et le fait de prévoir un identifiant de catégorie de priorité dans chacun de la pluralité de profils d'application.

11. Procédé selon la revendication 10, comprenant en outre la fourniture (306) d'une routine de résolution de conflit qui est opérationnelle pour résoudre un conflit de session de données pour des applications de service réseau d'après les identifiants de catégorie de priorité dans les profils d'application et le fait de prévoir la routine de résolution de conflit dans le module d'identité d'utilisateur.

12. Produit-programme d'ordinateur, comprenant :
un support lisible par ordinateur comprenant :
un jeu de codes pour amener au moins un ordinateur à réaliser un procédé selon l'une des revendications 1 à 5 ou 8 à 11 lorsqu'il est exécuté.

13. Appareil (50) de fourniture d'un accès différencié à une session de données sur un dispositif de communication sans fil (12), comprenant :
un moyen de définition d'une pluralité de profils d'application dont chacun correspond à une application de service réseau et inclut un identifiant d'adresse de réseau spécifique de l'application opérationnel pour établir une session de données pour l'application de service réseau correspondante ; et
un moyen de fourniture à un dispositif de communication sans fil d'un module d'identité d'utilisateur qui inclut une pluralité des profils d'application.

14. Appareil selon la revendication 13, dans lequel l'appareil comprend au moins un processeur, et dans lequel le moyen de fourniture d'une pluralité de profils d'application comprend un premier module et le moyen de fourniture à un dispositif de communication sans fil d'un module d'identité d'utilisateur comprend un deuxième module.
